# EUROPEAN PATENT APPLICATION

(11) **EP 4 560 662 A2**
(43) Date of publication of application: **28.05.2025**
(21) Application number: 24208643.7
(22) Date of filing: 24.10.2024
(51) Int. Cl.: H01G 4/012, H01G 4/008, H01G 4/232, H01G 4/30

(54) **MULTILAYER ELECTRONIC COMPONENT COMPRISING INTERNAL ELECTRODES WITH TRAPEZOIDAL ENDS AND FLOATING ELECTRODES**

(30) Priority: 22.11.2023 KR 20230163768
(71) Applicant: Samsung Electro-Mechanics Co., Ltd., Gyeonggi-do (KR)
(72) Inventor: Hwang, Jung Wun, Suwon-si, Gyeonggi-do (KR); Lee, Chae Dong, Suwon-si, Gyeonggi-do (KR); Park, Sun Kyoung, Suwon-si, Gyeonggi-do (KR); Oh, Ji Hye, Suwon-si, Gyeonggi-do (KR)
(74) Representative: Grünecker Patent- und Rechtsanwälte PartG mbB

(57) **Abstract**

A multilayer electronic component (100), comprising:

a body (110) including a dielectric layer (111) and a plurality of internal electrodes (121, 122) disposed alternately with the dielectric layer (111) in a first direction (T), the body (110) including a first surface (1) and a second surface (2) opposing each other in the first direction (T), a third surface (3) and a fourth (4) surface connected to the first (1) and second (2) surfaces and opposing each other in a second direction (L), and a fifth (5) surface and a sixth (6) surface connected to the first (1) to the fourth (4) surfaces and opposing each other in a third direction (W); and

external electrodes (131, 132) disposed on the third (3) and fourth (4) surfaces,

wherein at least one of the plurality of internal electrodes (121, 122) includes:

a main portion (121a) disposed in a central portion of the body (110) in the second direction (L),

a lead-out portion (121b) extending from the main portion (121a) in the second direction (L), having a first end portion (21a) in contact with the external electrode (131), and spaced apart from the fifth (5) and sixth (6) surfaces, and

an extension portion (121c) extending from the main portion (121a) in a direction opposite to the lead-out portion (121b), spaced apart from the external electrode (131) and having a second end portion (21b) opposing the first end portion (21a), and wherein when:

- a width of the main portion (121a) in the third direction (W) is defined as W1,

- a width of the first end portion (21a) in the third direction (W) is defined as W2, and

- a width of the second end portion (21b) in the third direction (W) is defined as W3,

- W2>W3>W1 is satisfied.

Further, the body (110) includes dielectric layers (111), a pair of internal electrodes (121, 122) spaced apart from each other in the second direction (L) and a floating electrode (223), wherein the pair of internal electrodes (121, 122) and the floating electrode (223) are alternately disposed in the first direction (T) with the dielectric layer (111) interposed therebetween.

## Description

### CROSS-REFERENCE TO RELATED APPLICATION(S)

This application claims benefit of priority to Korean Patent Application No. 10-2023-0163768 filed on November 22, 2023 in the Korean Intellectual Property Office, the disclosure of which is incorporated herein by reference in its entirety.

### BACKGROUND

### 1. TECHNICAL FIELD

The present disclosure relates to a multilayer electronic component.

### 2. DESCRIPTION OF RELATED ART

A multilayer ceramic component (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, charging or discharging electricity therein or therefrom. Such a multilayer ceramic capacitor may be used as a component of various electronic devices since a multilayer ceramic capacitor may have a small size and high capacitance and may be easily mounted.

Meanwhile, bending cracks may occur in a multilayer ceramic capacitor due to deformation or vibrations of a printed circuit board on which the multilayer ceramic capacitor is mounted. Cracks in a multilayer ceramic capacitor may cause a decrease in insulation resistance due to external moisture or a short circuit in an internal electrode, which may reduce electrical properties or reliability of the multilayer ceramic capacitor. Accordingly, the development of a multilayer ceramic capacitor having improved bending strength properties may be necessary.

### SUMMARY

An embodiment of the present disclosure is to provide a multilayer electronic component having improved bending strength.

An embodiment of the present disclosure is to provide a multilayer electronic component having improved electrical properties.

According to an embodiment of the present disclosure, a multilayer electronic component includes a body including a dielectric layer and a plurality of internal electrodes disposed alternately with the dielectric layer in a first direction, and including a first surface and a second surface opposing each other in the first direction, a third surface and a fourth surface connected to the first and second surfaces and opposing each other in a second direction, and a fifth surface and a sixth surface connected to the first to the fourth surfaces and opposing each other in a third direction; and an external electrode disposed on the third and fourth surfaces, wherein at least one of the plurality of internal electrodes includes a main portion disposed in a central portion of the body in the second direction, a lead-out portion extending from the main portion in the second direction, having a first end portion in contact with the external electrode, and spaced apart from the fifth and sixth surfaces, and an extension portion extending from the main portion in a direction opposite to the lead-out portion, spaced apart from the external electrode and having a second end portion opposing the first end portion, and wherein, when a width of the main portion in the third direction is defined as W1, a width of the first end portion in the third direction is defined as W2, and a width of the second end portion in the third direction is defined as W3, W2>W3>W1 is satisfied.

According to an embodiment of the present disclosure, a multilayer electronic component includes a body including a first surface and second surface opposing each other in a first direction, a third and fourth surfaces connected to the first and second surfaces and opposing each other in a second direction, and a fifth surface and a sixth surface connected to the first to fourth surfaces and opposing each other in a third direction, the body including a dielectric layer, a pair of internal electrodes spaced apart from each other in the second direction, and a floating electrode, wherein the pair of internal electrodes and the floating electrode are alternately disposed in the first direction with the dielectric layer interposed therebetween; and a first external electrode and a second external electrode disposed on the third and fourth surfaces, respectively, wherein the pair of internal electrodes include a first internal electrode including a first main portion and a first lead-out portion extending from the first main portion and having a first end portion in contact with the first external electrode, and a second internal electrode including a second main portion and a second lead-out portion extending from the second main portion and having a second end portion in contact with the second external electrode, wherein the floating electrode includes a third main portion, a first extension portion extending from the third main portion toward the first external electrode, having a third end portion, and spaced apart from the first external electrode, and a second extension portion extending from the third main portion toward the second external electrode, having a fourth end portion, and spaced apart from the second external electrode, wherein the first to third main portions are disposed in a central portion of the body in a second direction, and wherein, when widths of the first and second main portions in the third direction are defined as W11', a width of the third main portion in the third direction is defined as W12', widths of the first and second end portions in the third direction are defined as W2', widths of the third and fourth end portions in the third direction are defined as W3', W2'>W11' and W3'>W12' are satisfied.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is a cross-sectional diagram taken along line I-I' in FIG. 1;
FIG. 3 is a cross-sectional diagram taken along line II-II' in FIG. 1;
FIG. 4 is a cross-sectional diagram taken along line III-III' in FIG. 2;
FIG. 5 is a cross-sectional diagram taken along line IV-IV' in FIG. 2;
FIG. 6 is a plan diagram illustrating a state in which a first internal electrode and a second internal electrode of a multilayer electronic component overlap each other according to an embodiment of the present disclosure;
FIG. 7 is a cross-sectional diagram illustrating a multilayer electronic component according to an embodiment of the present disclosure, corresponding to FIG. 2;
FIG. 8 is a cross-sectional diagram taken along line V-V' in FIG. 7;
FIG. 9 is a cross-sectional diagram taken along line VI-VI' in FIG. 7; and
FIG. 10 is a plan diagram illustrating a state in which a first internal electrode and a second internal electrode of a multilayer electronic component overlap each other according to an embodiment of the present disclosure, corresponding to FIG. 6.

### DETAILED DESCRIPTION

Hereinafter, embodiments of the present disclosure will be described as below with reference to the accompanying drawings.

These embodiments are described in sufficient detail to enable those skilled in the art to practice the disclosure. It is to be understood that the various embodiments of the disclosure, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a thickness (T) direction, the second direction may be defined as a length (L) direction, and the third direction may be defined as a width (W) direction.

### Multilayer Electronic Component

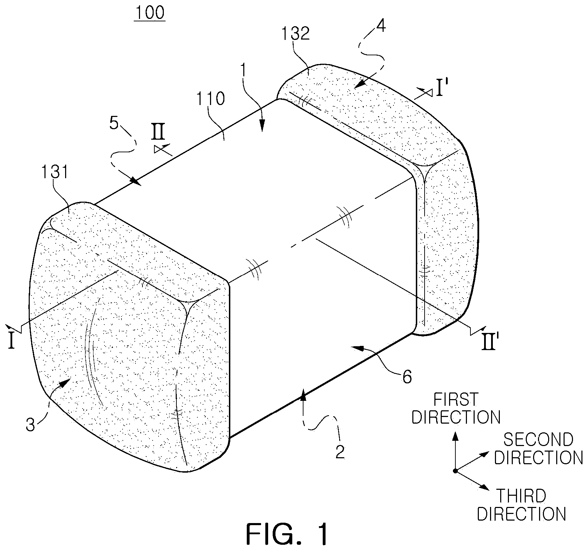

FIG. 1 is a perspective diagram illustrating a multilayer electronic component according to an embodiment.

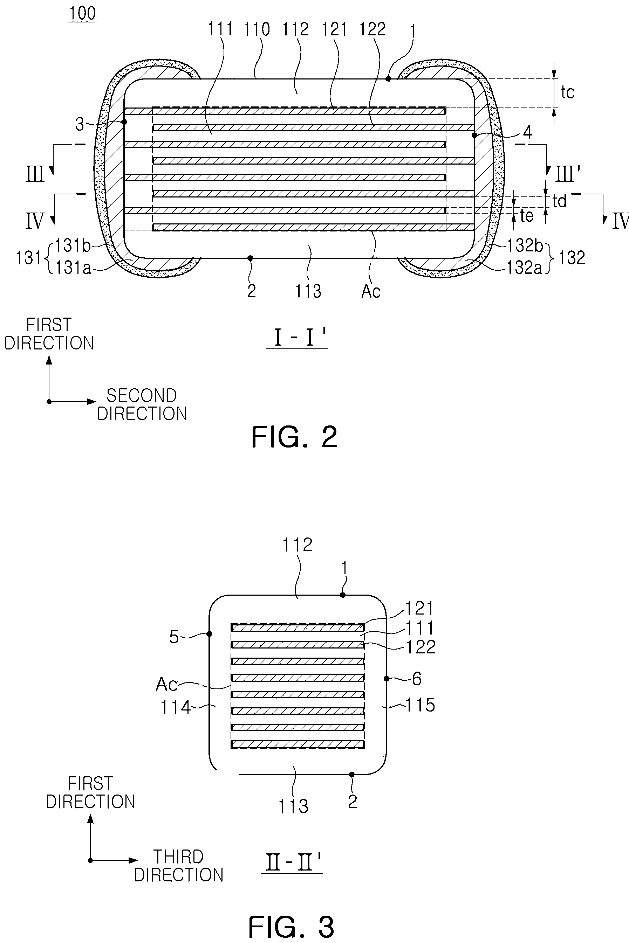

FIG. 2 is a cross-sectional diagram taken along line I-I' in FIG. 1.

FIG. 3 is a cross-sectional diagram taken along line II-II' in FIG. 1.

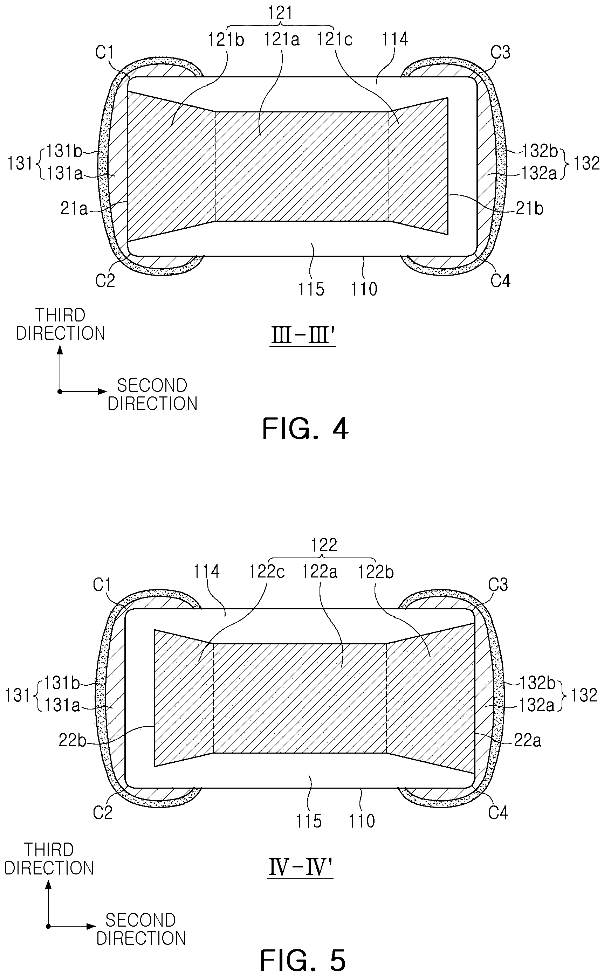

FIG. 4 is a cross-sectional diagram taken along line III-III' in FIG. 2.

FIG. 5 is a cross-sectional diagram taken along line IV-IV' in FIG. 2.

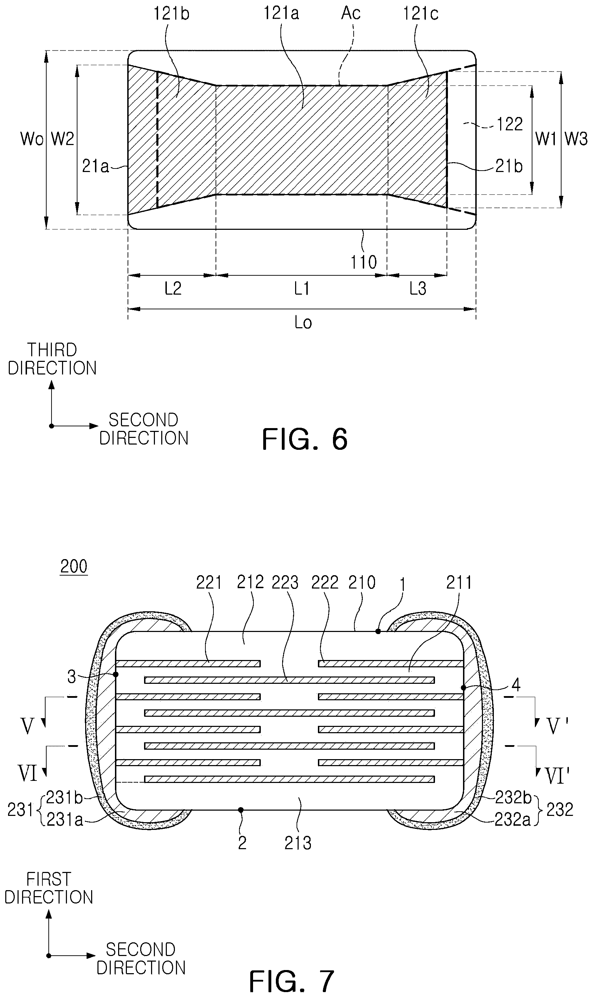

FIG. 6 is a plan diagram illustrating a state in which a first internal electrode and a second internal electrode of a multilayer electronic component overlap each other according to an embodiment.

Hereinafter, a multilayer electronic component according to an embodiment will be described in greater detail with reference to FIGS. 1 to 6. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

The size of the multilayer electronic component 100 may not be limited to any particular example. A maximum length of the multilayer electronic component 100 in the second direction may be, for example, 0.6 mm to 3.2 mm. A maximum width of the multilayer electronic component 100 in the third direction may be, for example, 0.3 mm to 1.6 mm.

Referring to FIGS. 1 to 3, the multilayer electronic component 100 according to an embodiment may include a body 110 including a dielectric layer 111 and internal electrodes 121 and 122, and external electrodes 131 and 132.

The shape of the body 110 may not be limited to any particular shape, but as illustrated, the body 110 may have a hexahedral shape or a shape similar to a hexahedral shape. Due to reduction of ceramic powder included in the body 110 during a sintering process or polishing of corners, the body 110 may not have an exactly hexahedral shape formed by linear lines but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2 and the third and fourth surfaces 3 and 4 and opposing each other in the third direction.

The body 110 may include the dielectric layer 111 and the first and second internal electrodes 121 and 122 disposed alternately in the first direction with the dielectric layer 111 interposed therebetween. The plurality of dielectric layers 111 forming the body 110 may be in a fired state, and boundaries between adjacent dielectric layers 111 may be integrated with each other such that boundaries therebetween may not be distinct without using a scanning electron microscope (SEM).

An average thickness td of the dielectric layer 111 may not need to be limited to any particular example. The average thickness td of the dielectric layer 111 may be, for example, 0.1 um to 20 um, 0.1 um to 10 um, 0.1 um to 5 um, 0.1 um to 2 um, or 0.1 um to 0.4 µm.

The dielectric layer 111 may be formed by preparing a ceramic slurry including ceramic powder, an organic solvent, an additive, and a binder, preparing a ceramic green sheet by coating the slurry on a carrier film and drying the slurry, and sintering the ceramic green sheet. The ceramic powder is not limited to any particular example as long as sufficient electrostatic capacitance may be obtained therewith, and for example, a barium titanate material, a lead composite perovskite material, or a strontium titanate- material may be used. An example of the ceramic powder may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which Ca (calcium) and Zr (zirconium) are partially dissolved. The organic solvent may be ethanol or the like, the binder may be polyvinyl butyral or the like, and the organic solvent or binder may be a generally used material used in the respective field.

The plurality of internal electrodes 121 and 122 may include, for example, a first internal electrodes 121 and a second internal electrode 122 disposed alternately with the dielectric layer 111 interposed therebetween. That is, the first internal electrodes 121 and the second internal electrode 122, a pair of electrodes having different polarities, may be disposed to oppose each other with the dielectric layer 111 interposed therebetween. The first internal electrodes 121 and the second internal electrode 122 may be electrically separated from each other by the dielectric layer 111 interposed therebetween.

The first internal electrode 121 may be spaced apart from the fourth surface 4 and may be connected to the first external electrode 131 on the third surface 3. The second internal electrode 122 may be spaced apart from the third surface 3 and may be connected to the second external electrode 132 on the fourth surface 4.

The conductive metal included in the internal electrodes 121 and 122 may be one or more of Ni, Cu, Pd, Ag, Au, Pt, Sn, W, Ti and alloys thereof, and may include Ni more preferably, but an embodiment thereof is not limited thereto.

The average thickness te of the internal electrodes 121 and 122 may not be limited to any particular example. The average thickness te of the internal electrodes 121 and 122 may be, for example, 0.1 um to 3.0 um, 0.1 um to 1.0 um, or 0.1 um to 0.4 µm.

The internal electrodes 121 and 122 may be formed by applying a conductive paste for internal electrodes including a conductive metal to a predetermined thickness on a ceramic green sheet and sintering. As the method of printing the conductive paste for internal electrodes, screen printing or gravure printing may be used, but an embodiment thereof is not limited thereto.

The average thickness td of the dielectric layer 111 and the average thickness te of the internal electrodes 121 and 122 may indicate the average thicknesses of the dielectric layer 111 and the internal electrodes 121 and 122 in the first direction, respectively. The average thickness td of dielectric layer 111 and the average thickness te of internal electrodes 121 and 122 may be measured by scanning cross-section in the first and second directions of the body 110, passing through a center in the third direction using a scanning electron microscope (SEM) at 10,000 magnification. More specifically, the average thickness td of the dielectric layer 111 may be measured by measuring the thicknesses at multiple points of the dielectric layer 111, for example, 30 points at equal distances in the second direction, and obtaining an average value thereof. Also, the average thickness te of the internal electrodes 121 and 122 may be measured by measuring the thicknesses at multiple points of the internal electrodes 121 and 122, for example, 30 points at equal distances in the second direction and obtaining an average value. The 30 points at equal distances may be designated in the capacitance formation portion Ac. By measuring the average value after measuring the average values for 10 dielectric layers 111 and 10 internal electrodes 121 and 122, respectively, the average thickness td of the dielectric layer 111 and the average thickness te of the internal electrodes 121 and 122 may be further generalized.

The body 110 may include a capacitance formation portion Ac disposed in the body 110 and including the first and second internal electrodes 121 and 122 disposed alternately with the dielectric layer 111 therebetween, and a first cover portion 112 and a second cover portion 113 disposed on both surfaces of capacitance formation portion Ac opposing each other the first direction. The cover portions 112 and 113 may prevent damage to the internal electrodes due to physical or chemical stress. The cover portions 112 and 113 may be configured similarly to the dielectric layer 111, other than the configuration in which the cover portions 112 do not include an internal electrode.

The average thickness tc of the cover portions 112 and 113 may not be limited to any particular example. The average thickness tc of the cover portions 112 and 113 may be, for example, 120 um or less, 100 um or less, 50 um or less, or 20 um or less. Here, the average thicknesses tc of the cover portions 112 and 113 may indicate the average thickness of the first cover portion 112 and the second cover portion 113, respectively.

The average thickness tc of the cover portions 112 and 113 may refer to the average thickness of the cover portions 112 and 113 in the first direction, and may be the average value of the thickness in the first direction, measured at five points at equal distances in the second direction in a cross-section in the first and second directions of the body 110, passing through a center in the third direction.

The cover portions 112 and 113 may be formed by laminating a predetermined number of ceramic green sheets on which conductive paste for an internal electrode is not applied on both surfaces opposing of the capacitance formation portion Ac in the first direction and sintering the sheets.

The body 110 may include a first margin portion 114 and a second margin portion 115 disposed on both surfaces of the capacitance formation portion Ac opposing each other in the third direction. In other words, the margin portions 114 and 115 may indicate a region between both ends of the internal electrodes 121 and 122 and the boundary surface of the body 110 in a cross-section in the first and third directions of the body 110.

The margin portions 114 and 115 may be configured similarly to the dielectric layer 111, other than the configuration in which the margin portions 114 and 115 do not include the internal electrodes 121 and 122. The margin portions 114 and 115 may prevent damage to the internal electrodes 121 and 122 due to physical or chemical stress.

It may not be necessary to specifically limit the average thickness of the margin portions 114 and 115. The average thickness of the margin portions 114 and 115 may be 120 µm or less, 100 um or less, 20 um or less, or 15 um or less, but an embodiment thereof is not limited thereto. Here, the average thicknesses tm of the margin portions 114 and 115 may indicate the average thicknesses of the first margin portion 114 and the second margin portion 115, respectively.

The average thickness tm of the margin portions 114 and 115 may refer to an average width of the margin portions 114 and 115 in the third direction, and may be the average value of a width in the third direction, measured at five points at equal distances in the first direction in a cross-section in the first and third directions of the body 110, passing through a center in the second direction.

The margin portions 114 and 115 may be formed by applying conductive paste for an internal electrode to a portion of the ceramic green sheet other than the region in which the margin portion is formed and performing sintering thereof. Alternatively, to suppress a step difference caused by the internal electrodes 121 and 122, after lamination, the internal electrodes 121 and 122 may be cut to be exposed to the fifth and sixth surfaces 5 and 6 of the body, and a single dielectric layer or two or more dielectric layers may be laminated on both surfaces of the capacitance formation portion Ac opposing each other in the third direction, thereby forming the margin portions 114, 115.

External electrodes 131 and 132 may be disposed on the third and fourth surfaces 3 and 4 of the body 110, and may extend to a portion of the first surface, second surface, fifth and sixth surfaces 1, 2, 5, and 6. Also, the external electrodes 131 and 132 may include a first external electrode 131 connected to the first internal electrodes 121 and a second external electrode 132 connected to the second internal electrode 122. In the drawings, the multilayer electronic component 100 may have two external electrodes 131 and 132, but an embodiment thereof is not limited thereto, and the number of the external electrodes 131 and 132 and the shape thereof may be varied depending on the shape of the internal electrodes 121 and 122 or other purposes.

The external electrodes 131 and 132 may include base electrode layers 131a and 132a in contact with the internal electrodes 121 and 122 and plating layers 131b and 132b disposed on the base electrode layers 131a and 132a. That is, the first external electrode 131 may include a first base electrode layer 131a in contact with the first internal electrodes 121 and a first plating layer 131b disposed on the first base electrode layer 131a, and the second external electrode 132 may include a second base electrode layer 132a in contact with the second internal electrode 122 and a second plating layer 132b disposed on the second base electrode layer 132a.

The base electrode layers 131a and 132a may include metal and glass. The base electrode layers 131a and 132a may be formed by dipping the third and fourth surfaces 3 and 4 of the body 110 in a conductive paste including metal powder and glass frit and performing sintering. The conductive metal included in the base electrode layers 131a and 132a may include Cu, Ni, Pd, Pt, Au, Ag, Pb, and/or alloys including the same, but an embodiment thereof is not limited thereto.

The base electrode layers 131a and 132a may include only one layer including metal and glass, but an embodiment thereof is not limited thereto, and the base electrode layers 131a and 132a may have a multilayer structure. For example, the base electrode layers 131a and 132a may include a first layer including metal and glass and a second layer disposed on the first layer and including metal and resin.

The metal included in the second layer is not limited to any particular example and may include one or more selected from a group consisting of Ni, Cu, Pd, Ag, Au, Pt, Sn, W, Ti and alloys thereof. The resin included in the second layer may include, for example, one or more materials selected from among epoxy resin, acrylic resin, and ethyl cellulose. The second layer may be formed by applying a conductive resin composition including metal powder and resin on the first layer, drying the composition, and performing curing and heat treatment.

The plating layers 131b and 132b may improve mounting properties. The types of the plating layers 131b and 132b are not limited to any particular example, and may be plating layers including Ni, Sn, Pd, and/or alloys including the same, or may be formed in a plurality of layers. The plating layers 131b and 132b may be, for example, a Ni plating layer or a Sn plating layer, or may be formed by forming a Ni plating layer and a Sn plating layer in order. Also, the plating layers 131b and 132b may include a plurality of Ni plating layers and/or a plurality of Sn plating layers.

Hereinafter, the internal electrodes 121 and 122 of the multilayer electronic component 100 according to an embodiment will be described in greater detail with reference to FIGS. 4 to 6.

According to an embodiment, at least one of the plurality of internal electrodes 121 and 122 may include main portions 121a and 122a, lead-out portions 121b and 122b, and extension portions 121c and 122c. At least one of the plurality of first internal electrode 121 may include a first main portion 121a, a first lead-out portion 121b and a first extension portion 121c, and at least one of the plurality of second internal electrodes 122 may include a second main portion 122a, a second lead-out portion 122b, and a second extension portion 122c.

The main portions 121a and 122a may overlap the main portion of another adjacent internal electrode among the plurality of internal electrodes 121 and 122 in the first direction. That is, the first main portion 121a may overlap the second main portion 122a of the adjacent second internal electrode 122 in the first direction. The main portions 121a and 122a may form capacitance of the multilayer electronic component 100. The main portions 121a and 122a may have a rectangular shape perpendicular to the first direction. The main portions 121a and 122a may be spaced apart from an external surface of the body 110, and the main portions 121a and 122a may be connected to the external electrodes 131 and 132 through the lead-out portions 121b and 122b. The main portions 121a and 122a may be disposed in a central portion of the body 110 in the second direction.

The lead-out portions 121b and 122b may extend in the second direction from the main portions 121a and 122a and may have first end portions 21a and 22a in contact with the external electrodes 131 and 132. That is, the first lead-out portion 121b may extend from the first main portion 121a in the second direction and may have a first end portion, a 1-1-th end portion 21a, in contact with the first external electrode 131. The second lead-out portion 122b may extend from the second main portion in the second direction and may have a first end portion, a 1-2-th end portion 22a, in contact with the second external electrode 132. By limiting the surfaces in contact with the internal electrodes 121 and 122 and the external electrodes 131 and 132 to the third surface and fourth surfaces 3 and 4 among the first to sixth surfaces 1, 2, 3, and 4, 5, and 6 of the body 110, to improve moisture resistance reliability of the multilayer electronic component 100, the lead-out portions 121b and 122b may be spaced apart from the fifth and sixth surfaces 5 and 6.

The extension portions 121c and 122c may extend from the main portions 121a and 122a in a direction opposite to the lead-out portions 121b and 122b, may be spaced apart from the external electrodes 132 and 131 and may have second end portions 21b and 22b opposing the first end portions 21a and 22a. That is, the first extension portion 121c may extend from the first main portion 121a in the direction opposite to the first lead-out portion 121b and may be spaced apart from the second external electrode 132, and the second extension portion 122c may extend from the second main portion 122a in the direction opposite to the second lead-out portion 122b and may be spaced apart from the first external electrode 131. The first extension portion 121c may have a second portion, a 2-1-th end portion 21b, opposing the 1-1-th end portion 21a, and the second extension portion 122c may have a second portion, a 2-2-th end portion 22b, opposing the 1-2-th end portion 22a.

According to an embodiment, when a width of the main portions 121a and 122a in the third direction is defined as W1, a width of the first end portions 21a and 22a in the third direction is defined as W2, and a width of the second end portions 21b and 22b in the third direction is defined as W3, W2>W3>W1 may be satisfied. By satisfying W2>W3>W1, the lead-out portions 121b and 122b and the extension portions 121c and 122c may effectively distribute bending stress applied to the body 110. Also, the width W2 of the first end portions 21a and 22a in the third direction may be greater than the width W1 of the main portions 121a and 122a in the third direction, such that residual organic substances in the dielectric layer 111 may be smoothly discharged during a sintering process, and by expanding a contact area between the internal electrodes 121 and 122 and the external electrodes 131 and 132, equivalent series resistance (ESR) of the multilayer electronic component 100 may be reduced. Also, the region having a minimum width in the third direction of the margin portions 114 and 115 may be limited to the first end portion 21a and 22a side, and the internal electrodes 121 and 122 may be prevented from being exposed to the fifth and sixth surfaces 5 and 6 side due to errors in the process. Accordingly, moisture resistance reliability of multilayer electronic component 100 may be prevented from deteriorating.

W1 may indicate, for example, an average width of the main portions 121a and 122a in the third direction. For example, W1 may indicate the average value of the widths of the main portions 121a and 122a in the third direction, measured at five points at equal distances in the second direction in a cross-section in the second and third directions of the body 110.

It may not be necessary to limit W1. For example, when the width of the body 110 in the third direction is defined as Wo, the ratio of W1 to Wo (W1/Wo) may be 0.4 to 0.8. When the W1/Wo is less than 0.4, capacitance of the multilayer electronic component 100 may excessively degrade, and when the W1/Wo is more than 0.8, the main portions 121a and 122a may be exposed to the fifth surface and sixth surface 5 and 6 sides due to errors in the process, such that of the reliability of the multilayer electronic component 100 may deteriorate due to moisture permeation.

W2 may not be limited to any particular example. For example, the ratio of W2 to Wo (W2/Wo) may be 0.85 to 0.99. When W2/Wo is less than 0.85, the effects of improving bending strength and reducing ESR in the embodiments may be minimal. When W2/Wo exceeds 0.99, the first end portions 21a and 22a may be exposed to the fifth surface and sixth surface 5 and 6 sides due to errors in the process, and reliability of the multilayer electronic component 100 may deteriorate due to moisture permeation.

The body 110 may have a first corner portion C1 connecting the third surface 3 to the fifth surface 5, a second corner portion C2 connecting the third surface 3 to the sixth surface 6, a third corner portion C3 connecting the fourth surface 4 to the fifth surface 5, and a fourth corner portion C4 connecting the fourth surface 4 to the sixth surface 6. Meanwhile, to prevent the corner portions C1, C2, C3, and C4 of the body 110 from breaking (chipping defects), the body 110 may be polished after sintering. Accordingly, each of the corner portions C1, C2, C3, and C4 may have a rounded shape.

The corner portions C1, C2, C3, and C4 may be portions of the body 110 vulnerable to permeation of external moisture. Accordingly, when the first end portions 21a and 22a are in contact with the corner portions C1, C2, C3, and C4, moisture resistance reliability of the multilayer electronic component 100 may be deteriorated. Accordingly, the first end portions 21a and 22a may be spaced apart from the corner portions C1, C2, C3, and C4. That is, the 1-1-th end portion 21a may be spaced apart from first the corner portion C1 and the second corner portion C2, and the 1-2-th end portion 22a may be spaced apart from the third corner portion C3 and the fourth corner portion C4.

In an embodiment, the extension portions 121c and 122c may overlap the lead-out portion of another adjacent internal electrode among the plurality of internal electrodes 121 and 122 in the first direction. That is, the first extension portion 121c may overlap the second lead-out portion 122b, adjacent in the first direction, in the first direction, and the second extension portion 122c may overlap the first lead-out portion 121b, adjacent in the first direction, in the first direction. That is, the main portions 121a and 122a, and also the lead-out portions 121b and 122b and the extension portions 121c and 122c may form the capacitance formation portion Ac, thereby improving capacitance of the multilayer electronic component 100.

In an embodiment, a width of the lead-out portions 121b and 122b in the third direction may gradually increase from the main portions 121a and 122a to the first end portions 21a and 22a, and a width of the extension portions 121c and 122c in the third direction may gradually increase from the main portions 121a and 122a to the second end portions 21b and 22b. That is, the width of the first lead-out portion 121b in the third direction may gradually increase from the first main portion 121a to the 1-1-th end portion 21a, and the width of the second lead-out portion 122b in the third direction may gradually increase from the second main portion 122a to the 1-2-th end portion 22a. The width of the first extension portion 121c in the third direction may gradually increase from the first main portion 121a to the 2-1-th end portion 21b, and the width of the second extension portion 122c in the third direction may gradually increase from the second main portion 122a to the 2-2-th end portion 22b.

That is, as the widths of the lead-out portions 121b and 122b and the extension portions 121c and 122c in the third direction may gradually increase toward the external side of the body 110, the internal electrodes 121 and 122 may have a relatively large area, and accordingly, bending stress applied to the body 110 may be effectively distributed. Also, as illustrated in FIG. 6, the region in which the lead-out portions 121b and 122b and the extension portions 122c and 121c of the capacitance formation portion Ac overlap each other in the first direction may also have widths in the third direction, gradually increasing toward the external side of the body 110, such that capacitance of the multilayer electronic component 100 may be effectively improved.

To improve bending strength of the multilayer electronic component 100, the first internal electrodes 121 and the second internal electrode 122 may be point-symmetrical to each other. Accordingly, in an embodiment, the main portions 121a and 122a may not overlap the lead-out portion of another adjacent internal electrode among the plurality of internal electrodes 121 and 122 in the first direction. That is, the first main portion 121a may not overlap the second lead-out portion 122b of the second internal electrode 122, adjacent thereto in the first direction, in the first direction. Also, in an embodiment, the main portions 121a and 122a may not overlap an extension portion of another adjacent internal electrode among the plurality of internal electrodes 121 and 122 in the first direction. That is, the first main portion 121a may not overlap the second extension portion 122c of the second internal electrode 122, adjacent thereto in the first direction, in the first direction.

In an embodiment, ends of the external electrodes 131 and 132 may overlap the lead-out portions 121b and 122b in the third direction. For example, the end of the first external electrode 131 may overlap the first lead-out portion 121b in the third direction, and the end of the second external electrode 132 may overlap the second lead-out portion 122b in the third direction. For example, a maximum length L2 of the lead-out portions 121b and 122b in the second direction may be longer than a distance from the third surface 3 or the fourth surface 4 to the ends of the external electrodes 131 and 132 in the second direction. Cracks formed in the body 110 may generally propagate from the ends of external electrodes 131 and 132. As the ends of the external electrodes 131 and 132 overlap the lead-out portions 121b and 122b in the third direction, the lead-out portions 121b and 122b having a width in the third direction greater than that of the main portions 121a and 122a may effectively relieve bending stress propagated from the ends of the external electrodes 131 and 132 to the dielectric layer 111.

The length of the main portions 121a and 122a, the lead-out portions 121b and 122b and the extension portions 121c and 122c in the second direction is not limited to any particular example. For example, when the length of the main portions 121a and 122a in the second direction is defined as L1, the maximum length of the lead-out portions 121b and 122b in the second direction is defined as L2, and the maximum length of the extension portions 121c and 122c in the second direction is defined as L3, L1>L2>L3 may be satisfied. When L1 is smaller than L2 and/or L3, capacitance of the multilayer electronic component 100 may be excessively reduced.

L2 is not limited to any particular example, and when the length of the body 110 in the second direction is defined as Lo, the ratio of L2 to Lo (L2/Lo) may be 0.05 to 0.30. When the L2/Lo is less than 0.05, the effect of improving bending strength of the embodiments may be minimal. Also, when the L2/Lo exceeds 0.30, capacitance of the multilayer electronic component 100 may decrease.

L3 is not limited to any particular example, and the ratio of L3 to L2 (L3/L2) may be 0.01 to 0.90. When L3/L2 is less than 0.01, the effects of improving bending strength and capacitance of the embodiments may be minimal. When L3/L2 exceeds 0.90, the internal electrodes 121 and 122 may be in contact with the external electrodes 132 and 131 having different polarities due to cutting errors.

L1 is not limited to any particular example, and the ratio of L1 to Lo (Lo/L1) may be 0.43 to 0.94.

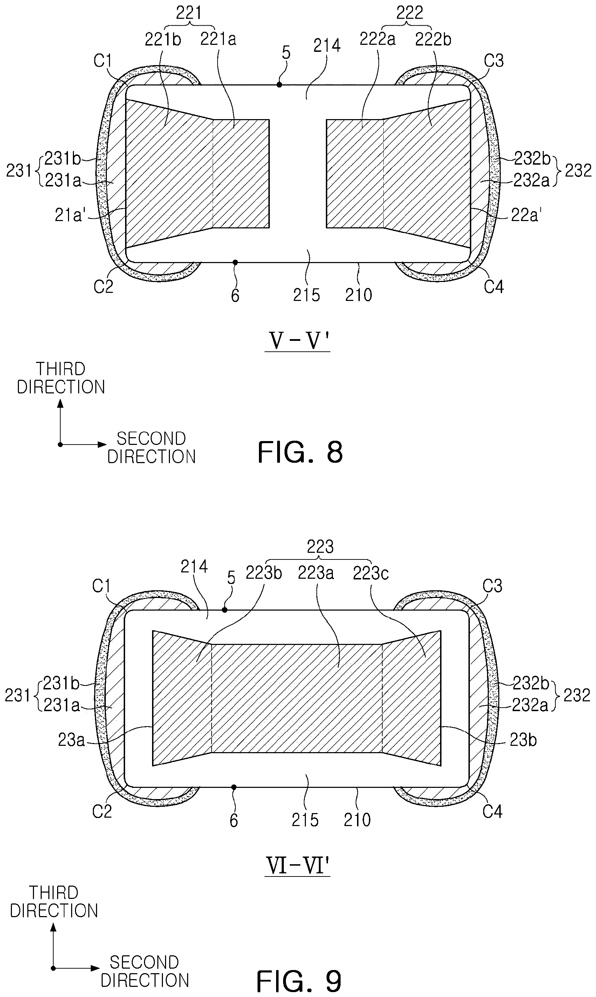

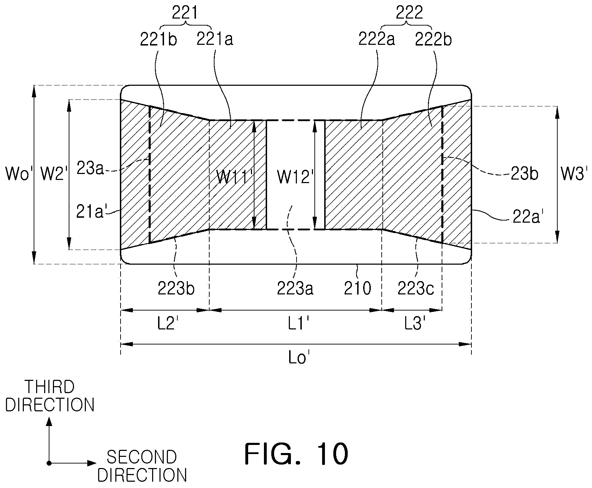

FIG. 7 is a cross-sectional diagram illustrating a multilayer electronic component according to an embodiment, corresponding to FIG. 2. FIG. 8 is a cross-sectional diagram taken along line V-V' in FIG. 7. FIG. 9 is a cross-sectional diagram taken along line VI-VI' in FIG. 7. FIG. 10 is a plan diagram illustrating a state in which a first internal electrode and a second internal electrode of a multilayer electronic component overlap each other according to an embodiment, corresponding to FIG. 6.

Hereinafter, a multilayer electronic component 200 according to another embodiment will be described with reference to FIGS. 7 to 10. The same/similar reference numerals may be used for components the same/similar to those of the multilayer electronic component 100 described in FIGS. 1 to 6, and overlapping descriptions will not be provided.

The multilayer electronic component 200 according to an embodiment may include a dielectric layer 211, a body 210 including a pair of internal electrodes 221 and 222 and a floating electrode 223, and external electrodes 231 and 232.

The body 210 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3, and 4 and opposing each other in the third direction.

In the body 210, the pair of internal electrodes 221 and 222 spaced apart from each other in the second direction, and the floating electrode 223, may be disposed alternately in the first direction with the dielectric layer 211 therebetween. For example, the pair of internal electrodes 221 and 222 may include a first internal electrode 221 and a second internal electrode 222 spaced apart from each other in the second direction. The first internal electrode 221 may be connected to the first external electrode 231 on the third surface 3, and the second internal electrode 222 may be connected to the second external electrode 232 on the fourth surface 4.

The body 210 may include cover portions 212 and 213 disposed on the internal electrodes 221 and 222 or the floating electrodes 223 disposed in an outermost portion with respect to the first direction. That is, the body 210 may include cover portions 212, 213 disposed on the first surface and second surface 1 and 2 side and not including electrodes. The body 210 may include margin portions 214 and 215 disposed on the fifth and sixth surfaces 5 and 6. The margin portions 214 and 215 may not include electrodes.

The external electrodes 231 and 232 may include a first external electrode 231 and a second external electrode 232 disposed on the third and fourth surfaces 3 and 4, respectively. The first external electrode 231 may be connected to the first internal electrode 221, and the second external electrode 232 may be connected to the second internal electrode 222. The external electrodes 231 and 232 may include base electrode layers 231a and 232a in contact with the internal electrodes 221 and 222 and plating layers 231b and 232b disposed on the base electrode layers 231a and 232a.

The first internal electrode 221 may include a first main portion 221a, and a first lead-out portion 221b extending from the first main portion 221a and having a first end portion 21a' in contact with the first external electrode 231. The second internal electrode 222 may include a second main portion 222a, and a second lead-out portion 222b extending from the second main portion 222a having a second end portion 22a' in contact with the second external electrode 232.

The floating electrode 223 may include a third main portion 223a, a first extension portion 223b extending from the third main portion 223a toward the first external electrode 231 and spaced apart from the first external electrode 231, and a second extension portion 223c extending from the third main portion 223a toward the second external electrode 232 and spaced apart from the second external electrode 232.

The first and second main portions 221a and 222a may overlap the third main portion 223a in the first direction. That is, the first to third main portions 221a, 222a, and 223a may form capacitance of the multilayer electronic component 200, and may divide the voltage applied to the multilayer electronic component 200 and may apply the divided voltages to a region in which the first main portion 221a and the third main portion 223a overlap each other and a region in which the second main portion 222a and the third main portion 223a overlap each other, such that reliability of the multilayer electronic component 200 may be improved.

The first to third main portions 221a, 222a, and 223a may be disposed in a central portion of the body 210 in the second direction. The first main portion 221a and the second main portion 222a may be spaced apart from each other in the central portion of the body 210 in the second direction and may oppose each other in the second direction.

According to an embodiment, when a width of the first and second main portions 221a and 222a in the third direction is defined as W11', a width of the third main portion 223a in the third direction is defined as W12', widths of the first and second end portions 21a' and 22a' in the third direction is defined as W2', and a width in the third direction of the both end portions 23a and 23b (third and fourth end portions) in the second direction of the floating electrode 223 is defined as W3', W2'>W11' and W3'>W12' may be satisfied.

By satisfying W2'>W11' and W3'>W12', the lead-out portions 221b and 222b and the extension portions 223b and 223c may effectively distribute bending stress applied to the body 210. Also, since W2' is larger than W11', residual organic matter in the dielectric layer 211 may be smoothly discharged during a sintering process, and a contact area between the internal electrodes 221 and 222 and the external electrodes 231 and 232 may be expanded such that equivalent series resistance (ESR) of the multilayer electronic component 200 may be reduced. Also, the region in which widths of the margin portions 214 and 215 are minimum in the third direction may be limited to the first and second end portions 21a' and 22a', such that the internal electrodes 221 and 222 may be prevented from being exposed to the fifth surface and sixth surface 5 and 6 side due to errors in the process. Accordingly, moisture resistance reliability of the multilayer electronic component 200 may be prevented from deteriorating. In an embodiment, W2'>W3' may be satisfied.

It may not be necessary to limit W11' and W12'. For example, when a width of the body 210 in the third direction is defined as Wo', the ratio of W11' to Wo', W11'/Wo', may be 0.4 to 0.8, and the ratio of the W12' to the Wo', W12' /Wo', may be 0.4 to 0.8. The ratio of W2' to Wo', W2'/Wo', may be, for example, 0.85 to 0.99.

In an embodiment, the first extension portion 223b may overlap the first lead-out portion 221b in the first direction, and the second extension portion 223c may overlap the second lead-out portion 222b in the first direction. Accordingly, capacitance of the multilayer electronic component 200 may be improved.

In an embodiment, a width of the first lead-out portion 221b in the third direction may gradually increase from the first main portion 221a to the first end portion 21a', a width of the second lead-out portion 222b in the third direction may gradually increase from the second main portion 222a to the second end portion 22a', and widths of the first extension portion 223b and the second extension portion 223c in the third direction may gradually increase from the third main portion 223a to both end portions 23a and 23b of the floating electrode 223 in the second direction. That is, the widths of the lead-out portions 221b and 222b and the extension portions 223b and 223c in the third direction may gradually increase toward the external side of the body 210, such that the internal electrodes 221 and 222 and the floating electrode 223 may have a relatively large area. Accordingly, bending stress applied to the body 210 may be effectively distributed. Also, as illustrated in FIG. 10, the width in the third direction of the region in which the lead-out portions 221b and 222b and the extension portions 223b and 223c overlap in the first direction may gradually increase toward the external side of the body 210, such that capacitance of the multilayer electronic component 200 may be effectively improved.

In an embodiment, when length of the third main portions 223a in the second direction are defined as L1', a maximum length of the lead-out portions 221b and 222b in the second direction is defined as L2', and maximum lengths of the extension portions 223b and 223c in the second direction are defined as L3', L1'>L2'>L3' may be satisfied. For example, when the length of the body 210 in the second direction is defined as Lo', the ratio of L2' to Lo', L2'/Lo', may be 0.05 to 0.30, and the ratio of the L3' to the L2', L3'/L2', may be 0.01 to 0.90. The L1' is not limited to any particular example, and the ratio of L1' to Lo', Lo'/L1', may be 0.43 to 0.94.

The lengths and widths disclosed herein may be measured using a scanning electron microscope (SEM). Other methods and/or tools appreciated by one of ordinary skill in the art, even if not described in the present disclosure, may also be used.

According to the aforementioned embodiments, a multilayer electronic component having improved warpage strength may be provided.

Also, a multilayer electronic component having improved electrical properties may be provided.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as being relevant to the other embodiment unless otherwise indicated.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of rights of the example embodiments.

While the embodiments have been illustrated and described above, it will be configured as apparent to those skilled in the art that modifications and variations could be made without departing from the scope of protection of the present disclosure as defined by the appended claims.

## Claims

1. A multilayer electronic component, comprising:
a body including a dielectric layer and a plurality of internal electrodes disposed alternately with the dielectric layer in a first direction, the body including a first surface and a second surface opposing each other in the first direction, a third surface and a fourth surface connected to the first and second surfaces and opposing each other in a second direction, and a fifth surface and a sixth surface connected to the first to the fourth surfaces and opposing each other in a third direction; and
external electrodes disposed on the third and fourth surfaces,
wherein at least one of the plurality of internal electrodes includes:
a main portion disposed in a central portion of the body in the second direction,
a lead-out portion extending from the main portion in the second direction, having a first end portion in contact with the external electrode, and spaced apart from the fifth and sixth surfaces, and
an extension portion extending from the main portion in a direction opposite to the lead-out portion, spaced apart from the external electrode and having a second end portion opposing the first end portion, and
wherein, when a width of the main portion in the third direction is defined as W1, a width of the first end portion in the third direction is defined as W2, and a width of the second end portion in the third direction is defined as W3, W2>W3>W1 is satisfied.

2. The multilayer electronic component of claim 1, wherein the extension portion overlaps the lead-out portion of an adjacent internal electrode among the plurality of internal electrodes in the first direction.

3. The multilayer electronic component of claim 1,
wherein a width of the lead-out portion in the third direction gradually increases from the main portion to the first end portion, and
wherein a width of the extension portion in the third direction gradually increases from the main portion to the second end portion.

4. The multilayer electronic component of claim 1, wherein, when a width of the body in the third direction is defined as Wo, a ratio of W1 to Wo, W1/Wo, is 0.4 to 0.8.

5. The multilayer electronic component of claim 1, wherein, when a width of the body in the third direction is defined as Wo, a ratio of W2 to Wo, W2/Wo, is 0.85 to 0.99.

6. The multilayer electronic component of claim 1,
wherein the body includes a corner portion connecting the third surface to the fifth surface, connecting the third surface to the sixth surface, connecting the fourth surface to the fifth surface, or connecting the fourth surface to the sixth surface, the corner portion having a rounded shape, and
wherein the first end portion is spaced apart from the corner portion.

7. The multilayer electronic component of claim 1, wherein, when a length of the main portion in the second direction is defined as L1, a maximum length of the lead-out portion in the second direction is defined as L2, and a maximum length of the extension portion in the second direction is defined as L3, L1>L2>L3 is satisfied.

8. The multilayer electronic component of claim 7, wherein, when a length of the body in the second direction is defined as Lo, a ratio of L2 to Lo, L2/Lo, is 0.05 to 0.30.

9. The multilayer electronic component of claim 7, wherein a ratio of L3 to L2, L3/L2, is 0.01 to 0.90.

10. The multilayer electronic component of claim 1, wherein an end of the external electrode overlaps the lead-out portion in the third direction.

11. The multilayer electronic component of claim 1, wherein the main portion overlaps the main portion of an adjacent internal electrode among the plurality of internal electrodes in the first direction, and does not overlap the lead-out portion of the adjacent internal electrode in the first direction.

12. The multilayer electronic component of claim 1, wherein the main portion overlaps the main portion of an adjacent internal electrode among the plurality of internal electrodes in the first direction, and does not overlap the extension portion of the adjacent internal electrode in the first direction.

13. A multilayer electronic component, comprising:
a body including a first surface and second surface opposing each other in a first direction, a third and fourth surfaces connected to the first and second surfaces and opposing each other in a second direction, and a fifth surface and a sixth surface connected to the first to fourth surfaces and opposing each other in a third direction,
the body including a dielectric layer, a pair of internal electrodes spaced apart from each other in the second direction, and a floating electrode, wherein the pair of internal electrodes and the floating electrode are alternately disposed in the first direction with the dielectric layer interposed therebetween; and
a first external electrode and a second external electrode disposed on the third and fourth surfaces, respectively,
wherein the pair of internal electrodes include:
a first internal electrode including a first main portion, and a first lead-out portion extending from the first main portion and having a first end portion in contact with the first external electrode, and
a second internal electrode including a second main portion, and a second lead-out portion extending from the second main portion and having a second end portion in contact with the second external electrode,
wherein the floating electrode includes:
a third main portion,
a first extension portion extending from the third main portion toward the first external electrode, having a third end portion, and spaced apart from the first external electrode, and
a second extension portion extending from the third main portion toward the second external electrode, having a fourth end portion, and spaced apart from the second external electrode,
wherein the first to third main portions are disposed in a central portion of the body in a second direction, and
wherein, when widths of the first and second main portions in the third direction are defined as W11', a width of the third main portion in the third direction is defined as W12', widths of the first and second end portions in the third direction are defined as W2', widths of the third and fourth end portions in the third direction are defined as W3', W2'>W11' and W3'>W12' are satisfied.

14. The multilayer electronic component of claim 13,
wherein the first extension portion overlaps the first lead-out portion in the first direction, and
wherein the second extension portion overlaps the second lead-out portion in the first direction.

15. The multilayer electronic component of claim 13,
wherein a width of the first lead-out portion in the third direction gradually increases from the first main portion toward the first end portion,
wherein a width of the second lead-out portion in the third direction gradually increases from the second main portion toward the second end portion, and
wherein widths in the third direction of the first extension portion and the second extension portion gradually increases from the third main portion toward the third and fourth end portions, respectively, in the second direction.
